# FASCICULE DE BREVET EUROPEEN

(11) **EP 1 965 885 B1**
(45) Date de publication et mention de la délivrance du brevet: **30.09.2009**
(21) Numéro de dépôt: 06841856.5
(22) Date de dépôt: 01.12.2006
(51) Int. Cl.: B01D 29/00, C10G 2/00, B01D 24/00

(54) **DISPOSITIF DE FILTRATION SECONDAIRE APPLICABLE A UN PROCEDE TRIPHASIQUE**
IN EINEM DREI-PHASEN-PROZESS VERWENDBARE SEKUNDÄRFILTERUNGSVORRICHTUNG
SECONDARY FILTRATION DEVICE APPLICABLE TO A THREE-PHASE PROCESS

(30) Priorité: 20.12.2005 FR 0513207
(43) Date de publication de la demande: 10.09.2008
(73) Titulaire: Institut Français du Pétrole, 92852 Rueil Malmaison Cedex (FR); ENI S.p.A., 00144 Roma (IT)
(72) Inventeur: ROLLAND, Matthieu, F-69390 Vernaison (FR); BRUNARD, Nathalie, F-69630 Chaponost (FR); VIGUIE, Jean-Christophe, 69006 Lyon (FR)
(86) Numéro de dépôt international: PCT/FR2006/002648
(87) Numéro de publication internationale: WO 2007/080247

(56) Documents cités:
- EP-A- 0 925 818
- US-A- 1 838 263
- US-A- 1 992 420
- US-A- 3 382 983
- US-A- 4 591 437
- US-A1- 2002 128 330

## Description

### DOMAINE DE L'INVENTION

La présente invention décrit un dispositif permettant la filtration secondaire des particules de catalyseur contenues dans un effluent de procédé comprenant un réacteur opéré en mode triphasique, c'est-à-dire avec un solide en suspension dans une phase liquide et en présence d'une phase gazeuse. Le plus souvent, ledit solide est un catalyseur de la réaction et le liquide et/ou le solide sont des réactifs. Le liquide ou le solide peuvent également être inertes dans ladite réaction.

La présente invention concerne également le procédé de séparation mettant en oeuvre ledit dispositif.

La présente invention concerne ainsi par exemple le cas d'un procédé Fischer-Tropsch, qui permet de réaliser la synthèse d'une gamme très large d'hydrocarbures à partir d'un mélange de monoxyde de carbone et d'hydrogène, appelé gaz de synthèse. Ce procédé connu depuis les années 1930, a été abondamment décrit et nous résumerons ici les caractéristiques essentielles de sa mise en oeuvre dans un réacteur de type "slurry".

Un réacteur "slurry" est un réacteur triphasique dans lequel les particules de catalyseur en suspension dans une phase liquide sont très finement divisées, typiquement avec une taille moyenne de l'ordre de 5 microns à 700 microns, et sont donc pratiquement solidaires de la phase liquide qui les contient, ladite phase liquide étant elle-même traversée par un flux de bulles de gaz de taille très étalée.

Le système hydrodynamique complexe constitué des particules solides de catalyseur en suspension dans une phase liquide hydrocarbure traversée par des bulles de gaz comprenant de l'hydrogène et du monoxyde de carbone, constitue le milieu appelé par l'homme du métier "slurry", dans le contexte du procédé Fischer-Tropsch. Ce terme est également utilisé dans d'autres domaines et notamment pour d'autres procédés opérés en présence d'une phase liquide et d'une phase gazeuse.

Le terme "slurry" est donc employé dans la suite du texte avec la définition donnée ci-dessus. Un exemple de réacteur "slurry" est par exemple un autoclave parfaitement agité comprenant un catalyseur en suspension. Un autre exemple de réacteur "slurry" est un réacteur comprenant un catalyseur en suspension dans une phase liquide connu sous le nom de colonne à bulles ou "slurry bubble column" (SBC) selon la terminologie anglosaxonne. Dans un réacteur S B C, le gaz est admis, généralement en bas du réacteur, dans un réacteur vertical de plusieurs mètres de diamètre et de grande hauteur (typiquement plusieurs dizaines de mètres pour un réacteur industriel) comprenant une phase liquide avec un catalyseur en suspension.

La séparation des particules solides de catalyseur de la suspension est un aspect important des procédés triphasiques et plus particulièrement du procédé Fischer-Tropsch, car il conditionne en partie la faisabilité et l'économie du procédé.

Le dispositif et le procédé de séparation, objets de la présente invention, s'appliquent en particulier à la séparation des particules de catalyseur dans un procédé triphasique, par exemple un procédé Fischer-Tropsch mis en oeuvre en "slurry". Ce dispositif et ce procédé, peuvent également concerner toute séparation de particules solides de diamètre de préférence inférieur à 50 microns, et plus préférentiellement inférieur à 20 microns, en suspension dans un milieu hydrocarbure quelconque.

### EXAMEN DE L'ART ANTERIEUR

La demande de brevet US 2005/0004414 A1 décrit l'élimination de particules ultrafines susceptibles de boucher le réacteur, le dispositif comportant une filtration primaire non décrite, et une filtration secondaire catalytique utilisant un catalyseur comprenant au moins un métal appartenant aux groupes VI ou VIII déposé sur un support de silice alumine. Le document cité décrit un mécanisme de "désolubilisation" des particules ultrafines qui précipitent dans les pores des particules constituant le filtre catalytique.
Les système de filtration comportant une seule couche sont en général bien connus et décrits dans plusieurs demande de brevets dont par exemple la demande de brevet US 2002/0128330.
Il est également connu des systèmes de filtrations multi-couches permettant de filtrer progressivement de plus en plus de particules de tailles de plus en plus petites. Les brevets
US 1 992 420 , US 3 382 983 et US 1 838 263 décrivent notamment des système de filtrations de particules comportant plusieurs couches de matériaux. L'avantage de tels dispostifs est de permettre une meilleure filtration en enlevant une grande quantité de particules présente dans le liquide filtré.
La présente invention se rapproche du mécanisme décrit dans ces documents cités puisqu'elle repose sur la formation d'un gâteau sur un premier média filtrant, suivi d'un piégeage en profondeur à l'intérieur d'un second média filtrant.

La demande de brevet WO 2005/005038 A1 décrit une filtration à travers un média de filtration présentant des ouvertures de taille comprise entre 10 et 25 microns avec formation d'un gâteau qui est périodiquement retrolavé, en général en même temps que le rétrolavage de la filtration primaire, Dans la présente invention, il n'y a pas de retrolavage du média filtrant, et le système de filtration une fois saturé est remplacé par un système neuf. Le terme rétrolavage dans le contexte du brevet cité, signifie un passage à courant inverse du fluide procédé, permettant d'entraîner les particules déposées sur le média filtrant.

Les demandes de brevets US 2005/0000861 A1 et US 2004/0266894 A1 décrivent un procédé Fischer-Tropsch en "slurry" muni d'un système de séparation des particules solides comportant une filtration primaire sur cartouche, qui peut être située à l'intérieur ou à l'extérieur du réacteur, et une filtration secondaire appelée micro ou ultra filtration, faisant appel à un matériau poreux très fin dont la taille des pores est comprise entre 0,002 et 0,1 micron. Le système de filtration secondaire est connecté au système de filtration primaire pour former un ensemble coaxial unique.

Dans la présente invention, le système de filtration secondaire est indépendant du système de filtration primaire, et se situe à l'extérieur du réacteur. Comme il sera exposé en détail plus loin, le système de filtration secondaire selon l'invention est constitué d'un lit granulaire comportant au moins deux couches distinctes.

### DESCRIPTION SOMMAIRE DES FIGURES

La figure 1 est une vue d'ensemble du procédé Fischer-Tropsch fonctionnant en mode "slurry" montrant l'emplacement du système de séparation primaire et du système de séparation secondaire selon l'invention.

La figure 2 représente une vue d'un lit axial de filtration secondaire selon l'invention avec ses différentes couches.

La figure 3 représente une vue d'un lit radial de filtration secondaire selon l'invention avec ses différentes couches.

Les numéros ou les lettres définissant les différents éléments de l'invention sont repris dans la description détaillée.

### DESCRIPTION SOMMAIRE DE L'INVENTION

La présente invention consiste en un dispositif de filtration secondaire applicable en particulier à un procédé de synthèse Fischer-Tropsch d'hydrocarbures faisant appel à un réacteur de type "slurry". Le dispositif de séparation selon la présente invention est appelé secondaire dans la mesure où il fait suite à un dispositif de séparation primaire qui permet d'éliminer les particules solides de catalyseur d'un diamètre supérieur à environ 20 microns. Le dispositif de séparation primaire ne fait pas l'objet de la présente invention, mais un tel dispositif se trouve en particulier décrit dans la demande de brevet US 2005/0000861 A1.

Tout dispositif de séparation primaire permettant d'éliminer la fraction de particules solides ayant une taille de particules supérieure à 50 microns, et préférentiellement supérieure à 20 microns, est compatible avec le dispositif de séparation secondaire objet de la présente invention. Il peut s'agir en particulier d'un dispositif de séparation primaire par décantation ou par filtration.

Le présent dispositif de séparation secondaire consiste essentiellement en un lit granulaire comportant au moins deux couches :
• une première couche, dite de stockage, constituée de particules macroporeuses inertes, de diamètre compris entre 1 et 3 mm, préférentiellement compris entre 1,5 et 2,5 mm,
• une seconde couche, dite de filtration profonde, constituée de particules inertes présentant une distribution de taille comprise entre 0,4 micron et 80 microns, avec un diamètre moyen compris entre 25 microns et 35 microns.

La couche de stockage du dispositif selon l'invention a généralement une porosité moyenne comprise entre 60 % et 75 %, et préférentiellement comprise entre 65 % et 70 %. La couche de stockage du dispositif selon l'invention aura généralement une surface spécifique comprise entre 100 et 200 m²/gramme, et préférentiellement comprise entre 150 et 180 m²/gramme. La couche de stockage peut être unique ou composée de plusieurs couches répondant à des spécifications de diamètre de particules, de porosité et de surface spécifique situées dans les limites indiquées. L'épaisseur totale de la ou des couches de stockage est comprise entre 0,3 mètre et 2 mètres, et préférentiellement comprise entre 0,5 mètre et 1 mètre.

De manière préférée, la couche de filtration profonde présente une distribution de taille de particules telle que 5 % à 20 % du volume de la couche soit représenté par des particules de diamètre inférieur à 4 microns.

La couche de filtration profonde du dispositif selon l'invention présente généralement une fraction de vide comprise entre 0,2 et 0,45 (c'est-à-dire entre 20 % et 45 % en volume) et préférentiellement comprise entre 0,25 et 0,4. De la même manière que pour la couche de stockage, la couche de filtration profonde pourra être unique ou composée de plusieurs couches répondant à des spécifications de diamètre de particules et de distribution de taille de particules situées dans les limites indiquées, soit un pourcentage de la fraction inférieure à 4 microns qui devra représenter préférentiellement entre 5 % et 20 % du volume de la ou des couches de filtration profonde. L'épaisseur totale de la ou des couches de filtration profonde est comprise entre 0,1 mètre et 2 mètres, et préférentiellement comprise entre 0,2 mètre et 1,5 mètres.

Le dispositif de séparation secondaire selon l'invention pourra avoir deux modes de fonctionnement :
- un mode axial dans lequel le fluide chargé en particules traverse le dispositif de haut en bas ou de bas en haut selon la disposition des couches, la ou les couches de stockage étant toujours traversées avant la ou les couches de filtration profonde,
- un mode radial dans lequel les couches se présentent sous forme d'anneaux concentriques traversés latéralement de la périphérie vers le centre ou du centre vers la périphérie, la ou les couches de stockage étant toujours traversées avant la ou les couches de filtration profonde.

Le choix d'un mode de fonctionnement en lit axial ou en lit radial est essentiellement lié à l'encombrement du dispositif, mais les performances du dispositif sont les mêmes dans les deux modes.

### DESCRIPTION DETAILLEE DE L'INVENTION

La présente invention se situe dans le cadre d'un procédé de synthèse d'hydrocarbures à partir d'un mélange gazeux comprenant du monoxyde de carbone et de l'hydrogène, généralement appelé gaz de synthèse, dans un réacteur de type "slurry" au sens précédemment défini. Elle peut néanmoins s'appliquer plus généralement à toute séparation de particules solides de diamètre inférieur à 50 microns, et préférentiellement inférieur à 20 microns, lesdites particules étant en suspension dans une phase liquide hydrocarbonée.

Le réacteur "slurry" dans le cas du procédé Fischer-Tropsch, travaille dans une gamme de température supérieure ou égale à 150°C et généralement comprise entre 100°C et 350°C, de préférence entre 170°C et 280°C, à une pression généralement comprise entre 0,5 et 20 MPa (1 MPa= 10⁶ pascal), de préférence entre 1 et 10 MPA, de manière plus préférée entre 1,5 et 4 MPa, et en présence d'un catalyseur initialement divisé en fines particules de diamètre compris entre 5 et 700 microns, de préférence entre 10 et 500 microns, de manière plus préférée entre 20 et 400 microns. De plus, la granulométrie initiale dudit catalyseur peut évoluer par attrition et le pourcentage de fines particules a alors tendance à augmenter au fil du temps.

Il est donc important de pouvoir disposer de moyens permettant d'éliminer les particules les plus fines présentes initialement ou formées au cours du temps, c'est-à-dire celles présentant un diamètre inférieur à 100 microns, de préférence inférieur à 80 microns et pouvant dans certains cas présenter des diamètres minima beaucoup plus petits : de l'ordre de quelques microns (1 à 10 microns), voire inférieur au micron.

Les catalyseurs Fischer-Tropsch comprennent typiquement du cobalt ou du fer réparti sur un support à base d'au moins un des oxydes des métaux suivants ou de leurs mélanges : silicium (Si), titane (Ti), aluminium (Al), zirconium (Zr) ou magnésium (Mg).

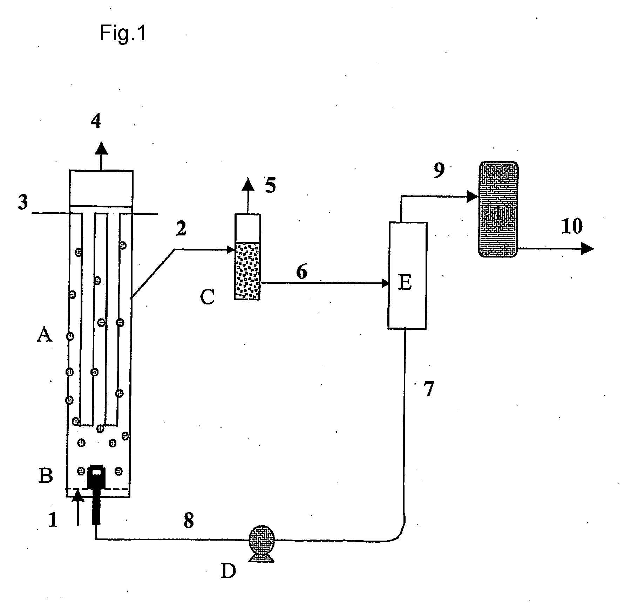

Un schéma typique d'un procédé de synthèse Fischer-Tropsch fonctionnant en "slurry" est donné sur la figure 1.

Le réacteur fluidisé (A) fonctionne en "slurry", avec un échangeur interne comprenant une ou plusieurs boucles de refroidissement (3) alimenté par un fluide (liquide ou vapeur) de refroidissement. La charge gazeuse est introduite dans le réacteur au moyen du distributeur noté (B) et de la ligne (1). Une boucle de recirculation de liquide contenant une partie de gaz est extraite en un point supérieur du réacteur par la ligne (2) et alimente un dégazeur noté (C). Le gaz est éliminé via la ligne (5) et la phase liquide est extraite du dégazeur (C) par la ligne (6), puis introduite dans le système de séparation primaire (E). De ce système de séparation (E), on extrait une première fraction de liquide (7) alimentant le réacteur "slurry" par l'intermédiaire de la pompe (D) et de la ligne (8), et une seconde fraction liquide (9) qui alimente le dispositif de filtration secondaire (F). Par la ligne (10) on recueille un produit liquide répondant aux spécifications de teneur en particules solides.

Le réacteur "slurry" comprend un système de séparation primaire (E) des particules de catalyseur, qui n'est pas décrit dans la présente demande, mais qui de préférence est, soit de type décanteur, soit un système de cartouches filtrantes. Ce système de séparation primaire peut être soit externe au réacteur, comme indiqué sur figure 1, soit interne audit réacteur (non représenté).

Le dispositif de séparation des particules solides est complété par une filtration secondaire (F), objet de la présente invention, qui permet d'abaisser la concentration en particules dans les effluents du réacteur à moins de 10 ppm (partie par million), et préférentiellement à moins de 5 ppm.

Les particules solides à séparer dans le système de filtration' secondaire sont des fines particules de catalyseur, dont le diamètre est généralement inférieur à 50 microns, et le plus souvent, en fonction des performances de la séparation primaire, inférieur à 20 microns. Ces particules peuvent comporter des particules ultrafines de taille inférieure au micron (particules également appelées submicroniques). La concentration en fines particules à l'entrée du système de filtration secondaire est généralement comprise entre 50 et 500 ppm.

Le dispositif de séparation secondaire est essentiellement constitué d'un lit comportant au moins deux couches de particules distinctes, une première couche destinée à faciliter la formation d'un gâteau, dite aussi couche de stockage, et une seconde couche destinée à piéger en profondeur les fines particules de catalyseur, dite aussi couche de filtration profonde.

L'appellation "première" et "seconde" couche est à comprendre en fonction du sens d'écoulement du fluide chargé en particules solides. La première couche est traversée par le fluide chargé en particules avant la seconde couche.

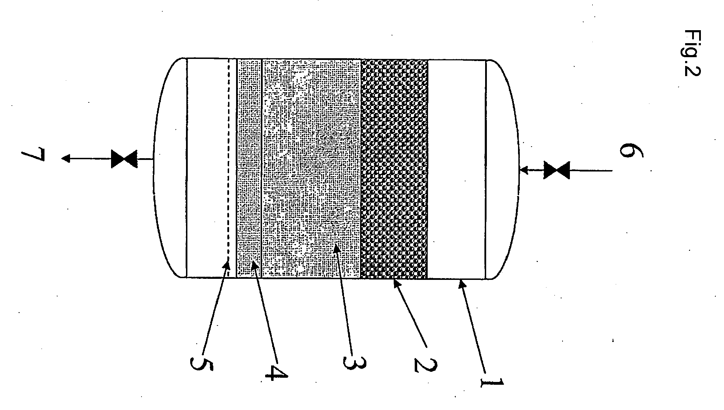

Sur la figure 2 on a représenté un dispositif de filtration secondaire selon l'invention, fonctionnant en mode axial et alimenté par le liquide chargé en particules par la ligne (6), le liquide déconcentré en particules étant évacué par la ligne (7).

Le dispositif de filtration secondaire comporte au moins une couche de garde (1), au moins une couche de stockage (2), au moins une couche de filtration profonde (3), et au moins une couche de protection (4) et (5).

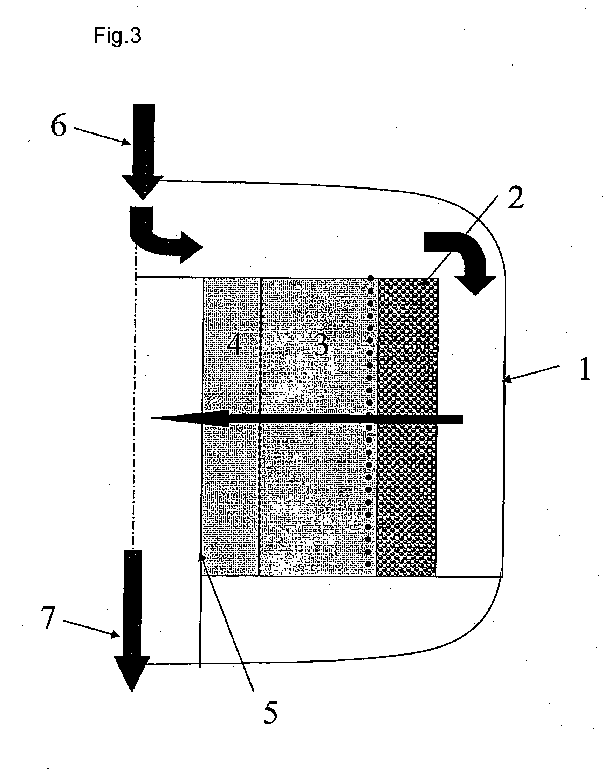

On retrouve ces mêmes couches dans la disposition radiale schématisée sur la figure 3.

Les numéros identiques des figures 2 et 3 désignent les mêmes éléments. La description qui suit vaut donc à la fois pour le dispositif selon l'invention en mode axial (figure 2) ou en mode radial (figure 3).

La première couche, ou couche de stockage (2), est généralement constituée de particules macroporeuses inertes, de diamètre compris entre 1 et 3 mm, préférentiellement compris entre 1,5 et 2,5 mm. La porosité moyenne de la couche de stockage est généralement comprise entre 60 % et 75 %, et préférentiellement comprise entre 65 % et 70 % en volume. La surface poreuse offerte par la couche de stockage sera généralement comprise entre 100 et 200 m²/gramme, et préférentiellement comprise entre 150 et 180 m²/gramme.

La seconde couche ou couche de filtration profonde (3) est constituée de particules inertes présentant une distribution de taille comprise entre 0,4 et 80 microns, avec un diamètre moyen compris entre 25 et 35 microns. Ladite couche de filtration profonde présente une distribution de taille de particules telle que 5 % à 20 % du volume de la couche soit représenté par des particules de diamètre inférieur à 4 microns.

La surface poreuse offerte par la couche de filtration profonde, est généralement comprise entre 100 et 400 m²/gramme, et préférentiellement comprise entre 200 et 300 m²/gramme. Le taux de vide initial de la couche de filtration profonde est généralement compris entre 0,20 et 0,45, et préférentiellement compris entre 0,25 et 0,4. Au cours de la filtration, ce taux de vide diminue en raison des particules solides qui se déposent à l'intérieur de la couche de filtration profonde, entraînant une augmentation de la perte de pression à la traversée du dispositif.

En tête et en fond du dispositif de filtration secondaire, il est nécessaire de prévoir une ou plusieurs couches de protection (1), (4) et (5) permettant d'éviter l'entraînement par la phase liquide des particules de la couche de stockage et/ou de la couche de filtration profonde constituant le lit de filtration secondaire.

Ces couches de protection ou de garde ne sont pas des éléments distinctifs de la présente invention, et peuvent être de bout type connu de l'homme du métier. Le lit de filtration secondaire est généralement opéré à une température comprise entre 130°C et 250°C, et préférentiellement comprise entre 150°C et 230°C.

La vitesse superficielle du fluide chargé en fines particules à l'intérieur du lit de filtration est généralement comprise entre 0,3 mètre/heure et 1 mètre/heure. La vitesse superficielle est définie comme le rapport du débit volumique de charge sur la section vide du lit de filtration.

L'épaisseur de la couche de stockage est de préférence comprise entre 0,3 mètre et 2 mètres, et plus préférentiellement entre 0,5 mètre et 1,0 mètre. L'épaisseur de la couche de filtration profonde est de préférence comprise entre 0,1 mètre et 2 mètres, et préférentiellement entre 0,2 mètre et 1,5 mètres.

Le dispositif de filtration selon l'invention peut éventuellement contenir plusieurs couches de stockage et plusieurs couches de filtration profonde, une couche de stockage ayant de préférence au moins une épaisseur de 0,3 mètre, et une couche de filtration profonde ayant de préférence au moins une épaisseur de 0,1 mètre.

La limite en épaisseur du lit de filtration secondaire est conditionnée par la perte de pression, qui doit rester inférieure à une valeur limite dépendant de la puissance des pompes installées. Afin de réduire les coûts de fonctionnement, la perte de pression est maintenue sous 0,1 MPa, préférentiellement sous 0,05 MPa en fin de filtration.

La perte de pression augmente avec la rétention en fines particules. Lorsqu'elle atteint la valeur limite décrite précédemment, le filtre est arrêté pour être vidé soit par gravité, soit par aspiration par le haut. L'intégralité des couches doit être remplacé avant remise en route du filtre. Un des avantages de l'invention est que, si la charge évolue, et avec elle les caractéristiques des particules à filtrer, il est très aisé de moduler les épaisseurs et/ou le type de média de filtration utilisé pour optimiser la filtration aux nouvelles conditions.

La durée typique de fonctionnement du système de filtration secondaire selon l'invention est au moins de 5 jours, et préférentiellement d'au moins 10 jours.

### EXEMPLES

Les deux exemples ci-dessous fournissent les dimensions principales d'un système de séparation secondaire selon l'invention en mode de lit axial (exemple 1) et en mode de lit radial (exemple 2).

L'unité de synthèse Fischer-Tropsch dans laquelle le dispositif de filtration secondaire selon l'invention s'incorpore, comporte un réacteur "slurry" de type S B C (colonne à bulles avec un catalyseur en suspension ou "Slurry Bubble Column", selon la terminologie anglosaxonne) traitant 30 tonnes/heure d'une charge de gaz de synthèse aux conditions opératoires suivantes :
- Température : 220°C
- Pression : 2,5 MPa.

Le catalyseur utilisé est à base de cobalt, et les particules en suspension ont un diamètre moyen de 150 microns, dont 300 ppm ont un diamètre inférieur à 25 microns.

Le système de filtration primaire est constitué d'un ensemble de cartouches de filtration du type commercial PALL de type "Rigimesh K".

### Exemple 1 (selon l'invention, figure 2)

En mode axial, le dispositif de filtration secondaire est constitué par 4 lits de filtration en parallèle dont un est déconnecté pour permettre son déchargement. Chaque lit de filtration a un diamètre de 5,3 mètres, et comporte les 6 couches suivantes de haut en bas :
1) une couche de garde (1) d'une hauteur de 0,1 m, constituée de billes d'alumine inerte de % de pouce,
2) une couche de stockage (2) d'une hauteur de 1,5 m, constituée de particules de billes d'alumine de 2 mm de type SCM139XL,
3) une couche de filtration profonde (3) d'une hauteur de 1,2 mètre, constituée de particules de diamètre compris entre 20 microns et 30 microns de type GA3001,
4) une couche de sable (4) de diamètre compris entre 40 microns et 315 microns,
5) une couche de sable de diamètre compris entre 400 microns et 1 000 microns (non représentée sur la figure 2),
6) une couche de billes d'aluminium de diamètre compris entre 2 mm et 3 mm (non représentée sur la figure 2),
7) une grille de retenue (5) de type "Johnson" (ou équivalent).

La durée de cycle d'un lit, c'est-à-dire sa durée de fonctionnement avant sa déconnection est de 63 jours. La teneur en particules en sortie de la filtration secondaire est inférieure à 5 ppm et l'effluent est totalement blanc.

### Exemple 2 (selon l'invention, figure 3)

En mode radial, le dispositif de filtration secondaire est constitué de deux lits radiaux, dont l'un est en situation de déchargement. Chaque lit radial est composé de couches cylindriques coaxiales. Le diamètre extérieur d'un lit est de 6,4 mètres et sa hauteur total est de 8,7 mètres.

De l'extérieur vers l'intérieur, le fluide chargé en particules solides traverse les couches suivantes :
1) une couche de garde (1) d'épaisseur 0,1 mètre,
2) une couche de stockage (2) d'épaisseur à 0,5 mètre, constituée de particules de billes d'alumines de 2mm de type SCM139XL,
3) une couche de filtration profonde (3) d'épaisseur 1,2 mètres, constituée de particules d'alumine de diamètre compris entre 20 et 30 microns de type GA.3001,
4) une couche de garde (4) composée de particules de diamètre compris entre 60 et 500 microns,
5) une grille de rétention de type Johnson ou équivalent (5).

La durée de fonctionnement d'un lit est de 62 jours. La teneur en particules en sortie de la filtration secondaire est inférieure à 5 ppm et l'effluent est totalement blanc.

Les particules en quantité très réduite encore présentes dans l'effluent de la filtration secondaire ont un diamètre inférieur à 0,2 micron, de sorte que l'effluent liquide après refroidissement, constitué essentiellement de paraffines, est totalement blanc. Or, dès que l'effluent contient au moins 10 ppm de particules, il devient habituellement gris. Le test visuel est donc parfaitement discriminant et confirme la faible teneur en particules de l'effluent.

## Revendications

1. Dispositif de séparation secondaire de particules solides de diamètre inférieur à 50 microns, et préférentiellement inférieur à 20 microns, en suspension dans une phase liquide hydrocarbonée, placé en aval d'un dispositif de séparation primaire de ladite phase liquide hydrocarbonée chargée en particules solides, comportant au moins deux couches :
- une première couche dite de stockage, constituée de particules macro poreuses inertes, de diamètre compris entre 1 mm et 3 mm et,
- une seconde couche dite de filtration profonde, constituée de particules inertes présentant une distribution de taille comprise entre 0,4 et 80 microns, avec un diamètre moyen compris entre 25 et 35 microns,
et dans lequel les couches sont disposées de bas en haut ou de haut en bas pour, un mode de fonctionnement en lit axial, ou sous forme d'anneaux concentriques traversés latéralement de la périphérie vers le centre ou du centre vers la périphérie pour un mode de fonctionnement en lit radial, la ou les les couches de stockage étant toujours traversées avant la ou les couches de filtration profonde.

2. Dispositif selon la revendication 1 dans lequel la première couche dite de stockage est constituée de particules présentant un diamètre compris entre 1,5 mm et 2,5 mm.

3. Dispositif de séparation secondaire selon l'une des revendications 1 et 2 dans lequel la distribution de taille de particules de la couche de filtration profonde est telle que 5 % à 20 % du volume de la couche est représenté par des particules de diamètre inférieur à 4 microns.

4. Dispositif de séparation secondaire selon l'une quelconque des revendications 1 à 3 dans lequel ledit dispositif contient plusieurs couches de stockage et plusieurs couches de filtration profonde.

5. Dispositif de séparation secondaire selon l'une quelconque des revendications 1 à 4, dans lequel la porosité moyenne de la ou des couches de stockage est comprise entre 60 % et 75 %.

6. Dispositif de séparation secondaire selon l'une quelconque des revendications 1 à 5, dans lequel la surface poreuse de la ou des couches de stockage est comprise entre 100 et 200 m²/gramme.

7. Dispositif de séparation secondaire selon l'une quelconque des revendications 1 à 6, dans lequel l'épaisseur totale de la ou des couches de stockage est comprise entre 0,3 mètre et 2 mètres, et préférentiellement comprise entre 0,5 mètre et 1 mètre.

8. Dispositif de séparation secondaire selon l'une quelconque des revendications 1 à 7, dans lequel le taux de vide initial de la ou des couches de filtration profonde est compris entre 0,2 et 0,45.

9. Dispositif de séparation secondaire selon l'une quelconque des revendications 1 à 8, dans lequel l'épaisseur totale de la ou des couches de filtration profonde est comprise entre 0,1 mètre et 2 mètres.

10. Dispositif de séparation secondaire selon l'une quelconque des revendications 1 à 9, dans lequel le système de filtration secondaire fonctionne en lit axial.

11. Dispositif de séparation secondaire selon l'une quelconque des revendications 1 à 9, dans lequel le système de filtration secondaire fonctionne en lit radial.

12. Procédé de séparation secondaire mettant en oeuvre le dispositif selon l'une des revendications 1 à 11.

13. Procédé selon la revendication 12 dans lequel ladite séparation est une séparation de particules de catalyseurs de synthèse d'hydrocarbures Fischer-Tropsch.

## Claims

1. A device for the secondary separation of solid particles with a diameter of less than 50 microns, preferably less than 20 microns, in suspension in a liquid hydrocarbon phase, placed downstream of a device for primary separation of said liquid hydrocarbon phase charged with solid particles, comprising at least two layers:
• a first layer, termed a holding layer, constituted by inert macroporous particles with a diameter in the range I to 3 mm;
• a second layer, termed a deep filtration layer, constituted by inert particles with a size distribution in the range 0.4 microns to 80 microns, with a mean diameter in the range 25 microns to 35 microns;
and wherein said layers are disposed from bottom from top to bottom to top for an axial mode, or in the form of concentric rings traversed laterally from the periphery to the centre or from the centre to the periphery for a radial mode, said holding layer always being traversed before the deep filtration layer.

2. A device according to claim 1, wherein the first layer, termed the holding layer, is constituted by particles with a diameter in the range 1.5 mm to 2.5 mm.

3. A device for secondary separation according to claim 1 or claim 2, wherein the size distribution of particles of the deep filtration layer is such that 5% to 20% of the volume of the layer is represented by particles with a diameter of less than 4 microns.

4. A secondary separation device according to any one of claims 1 to 3, wherein said device contains a plurality of holding layers and a plurality of deep filtration layers.

5. A secondary separation device according to any one of claims 1 to 4, wherein the mean porosity of the holding layer or layers is in the range 60% to 75%.

6. A secondary separation device according to any one of claims 1 to 5, wherein the porous surface of the holding layer or layers is in the range 100 to 200 m²/gram,

7. A secondary separation device according to any one of claims 1 to 6, wherein the total thickness of the holding layer or layers is in the range 0.3 metres to 2 metres, preferably in the range 0.5 metres to 1 metre.

8. A secondary separation device according to any one of claims 1 to 7, wherein the initial void fraction of the deep filtration layer or layers is in the range 0.2 to 0.45.

9. A secondary separation device according to any one of claims 1 to 8, wherein the total thickness of the deep filtration layer or layers is in the range 0.1 metres to 2 metres.

10. A secondary separation device according to any one of claims 1 to 9, wherein the secondary filtration system functions in axial bed mode.

11. A secondary separation device according to any one of claims 1 to 9, wherein the secondary filtration system functions in radial bed mode.

12. A secondary separation process employing the device according to any one of claims 1 to 11.

13. A process according to claim 12 in which said separating is a separating Fischer-Tropsch hydrocarbon synthesis catalyst particles.

## Patentansprüche

1. Vorrichtung zur sekundären Trennung von Feststoffpartikeln mit einem Durchmesser von weniger als 50 Mikron, und vorzugsweise von weniger als 20 Mikron, in Suspension in einer flüssigen Kohlenwasserstoffphase, die stromabwärts einer Vorrichtung zur primären Trennung der flüssigen Kohlenwasserstoffphase, die mit Feststoffpartikeln beladen ist, angeordnet ist, die mindestens zwei Schichten umfasst:
- eine erste so genannte Speicherschicht, die aus inerten makroporösen Partikeln mit einem Durchmesser im Bereich zwischen 1 mm und 3 mm besteht, und
- eine zweite so genannten Tiefenfiltrationsschicht, die aus inerten Partikeln besteht, die eine Größenverteilung im Bereich zwischen 0,4 und 80 Mikron aufweisen, mit einem mittleren Durchmesser im Bereich zwischen 25 und 35 Mikron,
und wobei die Schichten für einen Betriebsmodus im Axialbett von unten nach oben oder von oben nach unten, oder für einen Betriebsmodus im Radialbett in Form von konzentrischen Ringen angeordnet sind: die lateral von Außen nach Innen oder von Innen nach Außen durchquert werden, wobei die Speicherschicht(en) immer vor der oder den Tiefenfiltrationsschicht(en) durchquert werden.

2. Vorrichtung nach Anspruch 1, wobei die erste so genannte Speicherschicht aus Partikeln besteht, die einen Durchmesser im Bereich zwischen 1,5 mm und 2,5 mm aufweisen.

3. Vorrichtung zur sekundären Trennung nach einem der Ansprüche 1 und 2, wobei die Größenverteilung der Partikel der Tiefenfiltrationsschicht so ist, dass 5 % bis 20 % des Volumens der Schicht durch Partikel mit einem Durchmesser von weniger als 4 Mikron dargestellt wird.

4. Vorrichtung zur sekundären Trennung nach irgendeinem der Ansprüche 1 bis 3, wobei die Vorrichtung mehrere Speicherschichten und mehrere Tiefenfiltrationsschichten enthält.

5. Vorrichtung zur sekundären Trennung nach irgendeinem der Ansprüche 1 bis 4, wobei die mittlere Porosität der Speicherschicht(en) im Bereich zwischen 60 % und 75 % liegt.

6. Vorrichtung zur sekundären Trennung nach irgendeinem der Ansprüche 1 bis 5, wobei die poröse Oberfläche der Speicherschicht(en) im Bereich zwischen 100 und 200 m²/Gramm liegt.

7. Vorrichtung zur sekundären Trennung nach irgendeinem der Ansprüche 1 bis 6, wobei die Gesamtdicke der Speicherschicht(en) im Bereich zwischen 0,3 Meter und 2 Meter, und vorzugsweise im Bereich zwischen 0,5 Meter und 1 Meter liegt.

8. Vorrichtung zur sekundären Trennung nach irgendeinem der Ansprüche 1 bis 7, wobei die Anfangsporenzahl der Tiefenfiltrationsschicht(en) im Bereich zwischen 0,2 und 0,45 liegt.

9. Vorrichtung zur sekundären Trennung nach irgendeinem der Ansprüche 1 bis 8, wobei die Gesamtdicke der Tiefenfiltrationsschicht(en) im Bereich zwischen 0,1 Meter und 2 Metern liegt.

10. Vorrichtung zur sekundären Trennung nach irgendeinem der Ansprüche 1 bis 9, wobei das System zur sekundären Filtration im Axialbett arbeitet.

11. Vorrichtung zur sekundären Trennung nach irgendeinem der Ansprüche 1 bis 9, wobei das System zur sekundären Filtration im Radialbett arbeitet.

12. Verfahren zur sekundären Trennung, bei dem die Vorrichtung nach einem der Ansprüche 1 bis 11 eingesetzt wird.

13. Verfahren nach Anspruch 12, wobei die Trennung eine Trennung von Partikeln von Katalysatoren zur Fischer-Tropsch-Kohlenwasserstoffsynthese ist.
